Europäisches Patentamt

European Patent Office

Office européen des brevets

(19)

(11) Numéro de publication: **0 186 603**
**A1**

## (12) DEMANDE DE BREVET EUROPEEN

(21) Numéro de dépôt: **85420221.5**

(22) Date de dépôt: **09.12.85**

(51) Int. Cl.⁴: **G 11 B 5/706**
**H 01 F 1/11**

(30) Priorité: **11.12.84 FR 8419101**

(43) Date de publication de la demande:
**02.07.86 Bulletin 86/27**

(84) Etats contractants désignés:
**AT BE CH DE FR GB IT LI LU NL SE**

(71) Demandeur: **Etablissement Public dit: CENTRE
NATIONAL DE LA RECHERCHE SCIENTIFIQUE (CNRS)
15, Quai Anatole France
F-75700 Paris(FR)**

(72) Inventeur: **Gaud, Pierre
6, rue Garibaldi
F-38400 Saint-Martin D'Heres(FR)**

(72) Inventeur: **Joubert, Jean-Claude**

**F-38610 Venon par Gieres(FR)**

(74) Mandataire: **Chichery, Guy
RHONE-POULENC INTERSERVICES Service Brevets
Chimie Centre de Recherches de Saint-Fons B.P. 62
F-69192 Saint-Fons Cédex(FR)**

(54) **Procédé de préparation de ferrites hexagonales aimantées - utilisation de ces ferrites comme matériaux de base pour aimants ou pour l'enregistrement magnétique.**

(57) Procédé de préparation de ferrites hexagonales magnétiques dans lesquelles l'atome de fer peut éventuellement être substitué (hexaferrites de baryum substituées ou non ...) par réaction de synthèse hydrothermale entre au moins une ferrite alcaline et un composé libérant dans l'eau un ion alcalino-terreux (baryte ...) et éventuellement un (des) sel(s) .alcalin(s) d'oxydes métalliques.

Les ferrites hexagonales magnétiques sont utilisables à titre de matériaux pour les aimants permanents et pour composants hyperfréquences ou pour l'enregistrement magnétique.

EP 0 186 603 A1

PROCEDE DE PREPARATION DE FERRITES HEXAGONALES AIMANTEES

UTILISATION DE CES FERRITES COMME MATERIAUX DE BASE

POUR AIMANTS OU POUR L'ENREGISTREMENT MAGNETIQUE

La présente invention concerne un procédé pour préparer en milieu hydrothermal de fines particules de ferrites hexagonales éventuellement substituées, utilisables notamment comme matériaux de base pour aimants permanents ou pour composants hyperfréquences ainsi que pour l'enregistrement magnétique. L'invention concerne également les ferrites hexagonales obtenues par le procédé de fabrication ainsi que l'utilisation de ces ferrites dans les applications magnétiques.

On connait déjà des procédés d'obtention de ferrites hexagonales aimantées et notamment d'hexaferrite de baryum. La préparation d'hexaferrites éventuellement substituées a été décrite dans de nombreux brevets et articles et notamment dans l'article de H. HIBST paru dans Angew. Chem. Int. Ed. Angl. 21 [1982] 270-282.

Parmi les procédés utilisables pour parvenir aux hexaferrites, on mentionnera le procédé céramique, le procédé par coprécipitation et recuit, le procédé par réaction de précurseurs dans les sels fondus ou encore la synthèse hydrothermale.

La technique de synthèse hydrothermale consiste à mettre en réaction les constituants par solubilisation-coprécipitation en milieu aqueux sous pression et haute température [150°C à 400°C]. Cette réaction a d'abord été appliquée à la synthèse de l'hexaferrite de baryum, par réaction d'oxyde de fer et de baryte : ainsi on a fait réagir une dispersion d'oxyde de fer et une solution aqueuse de baryte ce qui a conduit certes à la formation d'hexaferrite de baryum mais les résultats ne sont pas satisfaisants [rendement, pureté] notamment du fait de la faible solubilité des oxydes de fer dans l'eau. C'est pourquoi il a été préconisé d'accroitre la solubilité des réactifs par le choix de précurseurs plus appropriés et/ou par l'emploi d'un milieu très basique [introduction de bases alcalines]. L'ajout de base alcaline permet également d'augmenter la nucléation en diminuant la taille des particules fabriquées et en abaissant la température de réaction.

Les précurseurs à base de fer destinés à remédier à la difficulté de mise en solution dans l'eau des oxydes de fer, et qui ont été préconisés dans le cadre de la synthèse hydrothermale ont été soit des sels ferriques ou ferreux tels que les chlorures ou les nitrates tous solubles dans l'eau, soit la goethite FeOOH $\alpha$ fraichement préparée.

C'est ainsi que selon la demande de brevet européen 102 819 de TODA, sont décrites des hexaferrites de baryum obtenues en synthèse hydrothermale en milieu très basique à partir de goethite FeOOH $\alpha$ ; les particules magnétiques, en forme de plaquettes sont utilisables pour l'enregistrement magnétique ; elles ont une surface spécifique faible [inférieure à $5m^2/g$], une aimantation de l'ordre de 35 à 60 uem/g et un champ coercitif inférieur à 1 000 oersteds.

Tous les procédés de préparation d'hexaferrite de baryum, par synthèse hydrothermale tels que décrits dans l'art antérieur présentent cependant un certain nombre de défauts néfastes à une transposition satisfaisante sur le plan industriel.

L'emploi de sels de fer solubles (chlorure, nitrate ...) implique des phénomènes de corrosion très importants prohibant industriellement l'emploi d'acier inox et nécessitant l'utilisation d'autoclaves à revêtements particulièrement résistant [les autoclaves doivent par exemple être chemisés en or].

Par ailleurs la pureté des ferrites hexagonales est souvent réduite par la présence d'autres phases non ferromagnétiques qu'il faut séparer ce qui a pour effet de limiter l'aimantation et le champ coercitif.

D'autre part la productivité est faible et les rendements sont loin d'être quantitatifs.

Il se posait donc le problème de mettre au point un procédé de synthèse hydrothermale de ferrites hexagonales et notamment d'hexaferrites de baryum éventuellement substituées, le procédé permettant d'obtenir avec une productivité élevée et un rendement très élevé des particules fines ferromagnétiques d'hexaferrites hexagonales ayant de bonnes propriétés magnétiques, le procédé étant par ailleurs effectué dans des conditions relativement modérées de pression et de température et dans un milieu peu corrosif n'exigeant pas obligatoirement un autoclave à revêtement particulièrement résistant.

L'invention répond précisément à ce but.

Il a été trouvé et c'est ce qui constitue l'objet de la présente invention un procédé de préparation de ferrites hexagonales ferromagnétiques de métal alcalino-terreux dans lesquelles l'atome de fer peut éventuellement être substitué, les ferrites hexagonales étant fabriquées par synthèse hydrothermale entre un composé libérant dans l'eau un ion alcalino-terreux et au moins un précurseur à base de fer, le procédé étant caractérisé en ce que l'on utilise à titre de précurseur au moins une ferrite alcaline éventuellement associée à des sels alcalins d'oxydes métalliques.

Ainsi on peut, dans le cadre de la présente invention, préparer des hexaferrites de métal alcalino-terreux telles que l'hexaferrite de baryum ou encore des hexaferrites dans lesquelles l'atome de fer est substitué, comme par exemple l'hexaferrite de baryum substituée par des métaux tels que le cobalt, le titane ...

Préparation d'hexaferrites dans lesquelles l'atome de fer n'est pas substitué

La description va concerner tout d'abord l'obtention d'hexaferrites de métal alcalino-terreux dont l'atome de fer n'est pas substitué ; par commodité de langage, celles-ci seront appelées hexaferrites non substituées ; ces hexaferrites sont fabriquées par synthèse hydrothermale mettant en oeuvre un composé libérant dans l'eau l'ion alcalino-terreux (baryte ...) et une ferrite alcaline.

Les ferrites alcalines utilisables dans le cadre de la présente invention peuvent être des composés différant par la nature du cation alcalin et/ou par la nature de la phase cristalline qu'ils constituent. A titre illustratif on peut citer les ferrites de fer de formule $FeNaO_2$ variétés $\alpha$ et $\beta$, la ferrite de potassium $FeKO_2$. Les ferrites alcalines sont des composés par elles-mêmes connues mais jamais utilisées à ce jour comme précurseurs en synthèse hydrothermale. Les ferrites alcalines sont facilement obtenues selon les procédés connus, par exemple par chauffage à l'air, à température élevée, d'un mélange minéral constitué par un oxyde de fer de granulométrie faible ou grossière et un carbonate alcalin.

Avantageusement dans le cadre du procédé on utilisera à titre de ferrite alcaline, la ferrite de sodium variété β. Celle-ci est facilement obtenue par chauffage aux environs de 1000°C durant plusieurs heures d'un mélange de carbonate de soude et d'oxyde de fer [$Fe_2O_3$ ou $Fe_3O_4$].

Le composé libérant dans l'eau un ion alcalino-terreux n'a pas par lui-même une nature critique : il peut s'agir d'un hydroxyde alcalino-terreux, d'un sel organique ou minéral ou encore d'un composé complexe de métal alcalino-terreux. Parmi les composés libérant un ion alcalino-terreux dans l'eau on citera à titre illustratif les hydroxydes, les chlorures, les acétates et les carbonates.

A titre préférentiel on utilisera dans le cadre de la présente invention à titre de composé libérant dans l'eau un ion alcalino-terreux, les composés du baryum, du strontium, ou du calcium et tout particulièrement les composés du baryum. Selon une variante avantageuse le composé du baryum est la baryte hydratée $Ba(OH)_2$, 8 $H_2O$.

Selon une variante de la présente invention il est également possible d'utiliser un mélange de ferrites alcalines et/ou encore un mélange de composé libérant dans l'eau au moins 2 ions alcalino-terreux de nature différente. Bien entendu l'emploi d'un mélange de ferrites alcalines et d'un mélange de composés libérant dans l'eau au moins deux ions alcalino-terreux doit être considéré comme une variante de la présente invention.

## Préparation d'hexaferrites dans lesquelles l'atome de fer est substitué

On peut, dans le cadre du procédé de la présente invention substituer l'atome de fer trivalent des hexaferrites par un ou plusieurs autres atomes métalliques.

Les possibilités de substitution correspondent à celles déjà décrites dans la littérature et notamment à celle décrites par H. HIBST dans l'article précédemment référencé.

Préférentiellement, la substitution du fer trivalent sera partielle et bimétallique : elle sera faite avantageusement par l'un des trois couples métalliques suivants :

- Ti + métal bivalent,
- Sn + métal bivalent,
- Zr + métal bivalent.

Le métal bivalent mis en oeuvre sera choisi avantageusement parmi le cuivre, le nickel, le cobalt, le magnésium, le zinc et le fer bivalent.

Selon une autre variante avantageuse de la présente invention, deux atomes de fer au plus seront substitués dans la formule de l'hexaferrite ; préférentiellement cette substitution sera faite à l'aide du couple métallique Titane-Cobalt en proportion variée, équimoléculaire ou non.

Enfin la substitution telle que définie et prévue dans le cadre de l'invention sera comprise comme s'étendant aux hexaferrites dans lesquelles l'atome de fer est subtitué et où il existe au moins 2 atomes alcalino-terreux dans l'édifice de l'hexaferrite.

Pour parvenir aux substitutions précédemment définies, il suffit d'ajouter dans le cadre du procédé de l'invention, un ou plusieurs sel(s) alcalin(s) d'oxyde(s) métallique(s) au mélange réactionnel constitué par la ferrite alcaline et le composé libérant dans l'eau l'ion alcalino-terreux ; les sels alcalins d'oxydes métalliques seront choisis en fonction des structures d'hexaferrites désirées et en proportions appropriées ; les sels alcalins d'oxydes métalliques peuvent comprendre un ou plusieurs atomes de métaux non alcalins. Dans un tel contexte et à titre illustratif, on citera les sels alcalins d'oxydes métalliques simples ou doubles suivants :

$$Ti\ Na_2O_3,\ SnNa_2O_3,\ ZrNa_2O_3,\ CoNa_2O_2,\ TiCoNa_2O_4\ ...$$

Les conditions mises en oeuvre pour effectuer la réaction de synthèse hydrothermale dans le cadre du procédé de l'invention vont être maintenant décrites ; ces conditions sont sensiblement les mêmes pour l'obtention d'hexaferrites dont l'atome de fer trivalent est substitué ou non. De manière générale la réaction de synthèse hydrothermale est effectuée à une température située au dessus de 100°C et inférieure au point critique du mélange aqueux ; la température est habituellement comprise entre 200° et 400°C ; comme on l'expliquera plus loin le choix de la température a une grande influence sur la taille, la cristallinité et les propriétés magnétiques de l'hexaferrite ; la pression est variable selon les conditions opératoires et notamment selon le taux de remplissage de l'autoclave. La pression est en général inférieure à 500 bars et habituellement comprise entre 30 et 300 bars.

La proportion relative des divers réactifs peut être très variable. En règle générale on met un excès du composé libérant dans l'eau l'ion alcalino-terreux. Dans le cas du baryum le rapport atomique baryum/fer (ou fer éventuellement substitué) est habituellement compris entre 1/6 et 1/12 (1/12 rapport stoechiométrique) et est préférentiellement compris entre 1/8 et 1/10.

Le procédé hydrothermal est de manière générale effectué sans ajouter initialement de base alcaline avec les réactifs principaux.

Selon une variante de la présente invention il est possible d'ajouter initialement une base alcaline avec les réactifs principaux. La quantité de base alcaline ajoutée dépend de la qualité de l'eau utilisée (afin de contrôler le pH) et est alors telle qu'il y ait initialement pour une mole de ferrite alcaline de 0,5 à 20 moles de base alcaline, la quantité d'eau ajoutée étant inférieure ou égale à 100 $cc^3$ ; avantageusement la base ajoutée est la soude. Cette addition de base alcaline permet ainsi qu'en abaissant la valeur de la température, d'augmenter les phénomènes de nucléation et par la de diminuer la taille des grains.

La valeur du coefficient de remplissage de l'autoclave peut être très variable ; avantageusement le coefficient de remplissage sera très élevé pour accroitre la productivité ; la quantité d'eau mise en oeuvre peut être relativement faible : le mélange de poudre ferrite alcaline + composé libérant dans l'eau l'ion alcalin-terreux peut ainsi pondéralement représenter 100 à 300 % du poids de l'eau engagée.

On observe donc que contrairement aux procédés antérieurs la quantité de produit formé est très grande pour un volume donné d'autoclave, puisque la quantité d'eau mise en oeuvre peut être très faible.

Le procédé de synthèse hydrothermale est effectué pendant des durées variables évidemment fonction de la température, de la pression, de la nature des réactifs et de leur proportion. Habituellement les durées sont comprises entre 1 heure et plusieurs heures.

Lorsque la réaction est achevée ou qu'on a décidé de l'arrêter, le milieu réactionnel est ramené à température ordinaire, de préférence en refroidissant rapidement l'autoclave.

L'hexaferrite hexagonale produite est purifiée selon les procédés classiques en éliminant les résidus de réactifs ainsi que les phases formées non ferromagnétiques ; on peut en particulier mettre en oeuvre un traitement de séparation basé sur les différences des propriétés magnétiques.

Selon un traitement préféré de la présente invention, les hexaferrites sont lavées avec des solutions aqueuses d'acide dilué tels que l'acide chlorhydrique, l'acide nitrique, qui permettent en général de bien éliminer les phases non ferromagnétiques du présent système ; la dilution des acides n'est pas critique : celle-ci est habituellement comprise entre 5 et 50 %. Une dilution de 20 % convient bien.

Selon un autre traitement préféré de la présente invention, il est également possible d'effectuer un recuit sur l'hexaferrite produit par la synthèse hydrothermale. Ce recuit est habituellement effectué sous air durant une ou plusieurs heures à une température comprise entre 700 et 1200°C ; cette température est avantageusement située aux alentours de 1000° C.

Enfin selon un autre traitement de purification des hexaferrites on peut combiner dans un ordre variable un lavage acide et un recuit. C'est cette combinaison, bien choisie, de traitements qui permet en général d'obtenir les propriétés magnétiques optimum.

Le procédé selon l'invention permet, comme on l'a déja dit, de fabriquer des hexaferrites hexagonales à propriétés magnétiques variées grace aux possibilités de substitution du fer trivalent présent dans leur molécule et utilisables, soit dans les aimants permanents, soit pour les composants hyperfréquences ou encore à titre de supports d'enregistrement magnétiques.

On sait que les exigences en matière de propriétés magnétiques sont différentes selon qu'il s'agisse de particules pour aimants permanents ou pour support d'enregistrement.

Le procédé selon l'invention permet d'obtenir des particules ferromagnétiques pour aimants permanents ; celles-ci, qui ne sont pas en général substituées, sont caractérisées par une valeur élevée de l'aimantation et par un champ coercitif au moins égal à 1200 oersteds. Afin de parvenir à de telles particules on effectue la réaction de synthèse hydrothermale à température relativement modérée [225° à 300°C] ; les hexaferrites produites subissent ensuite préférentiellement un traitement de recuit qui permet en général d'élever la valeur de l'aimantation et la valeur de la coercitivité. Les particules produites ont une aimantation spécifique d'au moins 65 uem/g et un champ coercitif d'au moins 2500. Bien entendu la précision qui vient d'être donnée ne peut en aucune sorte être considérée comme une limitation.

Le procédé selon l'invention permet également d'obtenir des particules d'hexaferrites hexagonales substituées ou non et utilisables comme supports d'enregistrement magnétique. Pour y parvenir on effectue la réaction de synthèse hydrothermale à une température relativement élevée de l'ordre de 300°C ou plus. Après un traitement de purification les particules présentent une aimantation spécifique d'au moins 65 uem/g et une valeur du champ coercitif inférieure à 1200 oersteds.

Un autre objet de la présente invention est constitué par les hexaferrites hexagonales obtenues par le procédé tel que précédemment décrit avec toutes ses variantes d'exécution.

Enfin un dernier objet de la présente invention est constitué par l'utilisation des ferrites hexagonales fabriquées selon le procédé de la présente invention, à titre de matériaux magnétiques pour aimants permanents ou pour l'enregistrement magnétique.

Les exemples qui suivent illustrent l'invention.


Exemple 1

On introduit dans un autoclave 39,40 g de baryte octahydratée $Ba(OH)_2$, 8 $H_2O$ ainsi que 110,60 g de β ferrite de sodium $NaFeO_2$ et 90 $cm^3$ d'eau ; le mélange réactionnel dans lequel le rapport atomique baryum/fer est égal à 1/8 est chauffé durant 4 heures à 395°C ; la pression atteint 200 bars. Après refroidissement par trempe, la masse réactionnelle qui se présente sous forme particulaire est d'abord lavée à l'aide d'une solution aqueuse d'acide nitrique à 20 %, puis par de l'eau pure et enfin recuite à 1000°C à l'air durant 2 heures.

Par diffraction X on met en évidence la présence d'une phase M bien cristallisée caractéristique de l'hexaferrite de baryum $BaFe_{12}O_{19}$. L'hexaferrite a été obtenue avec un rendement de 90 % et une pureté de 95 %.

Les propriétés magnétiques sont les suivantes :

- aimantation spécifique    66,2   uem/g   (66,6 $Am^2$/hg)
- champ coercitif          1250    oersteds

Les mesures d'aimantation ont été faites alors que le champ maximum était de 2,66 tesla.

La surface spécifique des grains est de 2,7 $m^2$/g.


Exemple 2

On effectue la synthèse hydrothermale selon le procédé décrit à l'exemple 1 mais à une température de 250°C durant 4 heures 30 minutes [pression maximum atteinte : 40 bars].

Après trempe et purification selon l'exemple 1, lavage puis recuit on obtient des cristaux d'hexaferrite de baryum dont le champ coercitif est de 3600 oersteds.

L'aimantation est de 54,5 uem/g

La surface spécifique est de 5,3 $cm^2$/g

Si on procède d'abord à un recuit suivi d'un lavage, on a les propriétés :

- aimantation spécifique    65    uem/g
- champ coercitif          2660    oersteds
- surface spécifique        2,5 $cm^2$/g


Exemple 3

On effectue la synthèse hydrothermale selon le procédé décrit à l'exemple 1 mais à une température de 345°C durant 6 heures [pression maximum atteinte : 130 bars], alors que le volume d'eau initialement introduit est de 60 $cm^3$.

Après trempe et purification selon l'exemple 1 on a obtenu des cristaux d'hexaferrite de baryum ayant les propriétés magnétiques suivantes :

- aimantation spécifique    :    64,2 uem/g
- champ coercitif           :  1460    oersteds
- surface spécifique        :     3,7 m$^2$/g

## Exemple 4

Selon le mode opératoire de l'exemple 1 on effectue la réaction de synthèse hydrothermale à 400°C durant 6 heures, en mettant en oeuvre initialement 90 cm$^3$ d'eau et 150 g de mélange de poudre baryte-ferrite.

Dans l'expérience 4a le rapport atomique baryum/Fer a été de 1/6 ; dans l'expérience 4b le rapport atomique a été de 1/10.

Après trempe et purification selon l'exemple 1 on a obtenu des cristaux d'hexaferrite de baryum ayant les propriétés suivantes :

### exemple 4 a

- aimantation spécifique :    67,7 uem/g
- champ coercitif         :  1250    oersteds

### exemple 4 b

- aimantation spécifique :    66,4 uem/g
- champ coercitif         :  1350    oersteds

## Exemple 5

On introduit dans un autoclave 39,425 g de baryte octahydratée $Ba(OH)_2$, 8 $H_2O$, 101,61 g de β ferrite de sodium $NaFeO_2$ 9,00 g du composé de formule $TiCoNa_2O_4$ et 90 cm$^3$ d'eau ; le mélange réactionnel est chauffé durant 4 h à 300°C.

Après refroidissement par trempe, la masse réactionnelle qui se présente sous forme particulaire est lavée à l'eau pure, recuite à 1000°C à l'air durant 2 heures, lavée à l'aide d'une solution aqueuse d'acide nitrique à 20 %, et enfin lavée à l'eau pure.

Par diffraction X et analyse chimique on met en évidence que le composé formé avec un rendement de l'ordre de 90 % correspond à l'hexaferrite de formule suivante :

$$BaFe_{11}Ti_{0,5}Co_{0,5}O_{19}$$

Les propriétés magnétiques sont les suivantes :

- aimantation spécifique   :   60 uem/g
- champ coercitif          :   1200 oersteds

REVENDICATIONS

1 - Procédé de préparation de ferrites hexagonales ferromagnétiques de métal alcalino-terreux dans lesquelles l'atome de fer peut éventuellement être substitué, les ferrites hexagonales étant fabriquées par synthèse hydrothermale entre un composé libérant dans l'eau l'ion alcalino-terreux et un précurseur à base de fer, le procédé étant caractérisé en ce que l'on utilise à titre de précurseur au moins une ferrite alcaline, éventuellement associée à des sels alcalins d'oxydes métalliques.

2 - Procédé selon la revendication 1 caractérisé en ce que la ferrite alcaline est la ferrite de sodium variété β.

3 - Procédé selon l'une des revendications 1 et 2 caractérisé en ce que le composé libérant dans l'eau l'ion alcalino-terreux est un hydroxyde, ou un sel organique ou minéral.

4 - Procédé selon l'une des revendication 1 et 2 caractérisé en ce que le composé libérant dans l'eau l'ion alcalino-terreux est un composé du baryum ou du strontium.

5 - Procédé selon l'une des revendication 1 et 2 caractérisé en ce que le composé libérant dans l'eau l'ion alcalino-terreux est la baryte.

6 - Procédé de préparation de ferrites hexagonales selon l'une des revendications 1 ou 2 caractérisé en ce que après réaction les hexaferrites sont purifiées par lavage acide ou lavage acide et recuit.

7 - Procédé selon la revendication 1 de préparation d'hexaferrites dans lesquelles l'atome de fer est substitué, le procédé étant caractérisé en ce que l'on ajoute au mélange réactionnel constitué par la ferrite alcaline et le composé libérant dans l'eau l'ion alcalino-terreux un ou plusieurs sel(s) alcalin(s) d'oxyde(s) métallique(s).

8 - Procédé selon la revendication 7 dans lequel le (ou les) sel(s) alcalin(s) d'oxyde(s) métallique(s) sont choisis parmi les sels d'oxydes métalliques simples ou doubles, de telle manière que la substitution des hexaferrites soit bimétallique et corresponde à l'une des trois possibilités suivantes :

- Ti + métal bivalent
- Sn + métal bivalent
- Zr + métal bivalent

le métal bivalent étant choisi parmi le cuivre, le nickel, le cobalt, le magnésium, le zinc ou le fer bivalent.

9 - Procédé selon la revendication 7 dans lequel la substitution des hexaferrites correspond au couple métallique titane-cobalt.

10 - Ferrites hexagonales obtenues selon l'une des revendications précédentes.

11 - Utilisation des ferrites hexagonales obtenues selon l'une des revendications 1 à 9 à titre de matériaux magnétiques pour aimants permanents, pour composants hyperfréquences ou pour l'enregistrement magnétique.

## REVENDICATIONS

1 - Procédé de préparation de ferrites hexagonales ferromagnétiques de métal alcalino-terreux dans lesquelles l'atome de fer peut éventuellement être substitué, les ferrites hexagonales étant fabriquées par synthèse hydrothermale entre un composé libérant dans l'eau l'ion alcalino-terreux et un précurseur à base de fer, le procédé étant caractérisé en ce que l'on utilise à titre de précurseur au moins une ferrite alcaline, éventuellement associée à des sels alcalins d'oxydes métalliques.

2 - Procédé selon la revendication 1 caractérisé en ce que la ferrite alcaline est la ferrite de sodium variété β.

3 - Procédé selon l'une des revendications 1 et 2 caractérisé en ce que le composé libérant dans l'eau l'ion alcalino-terreux est un hydroxyde, ou un sel organique ou minéral.

4 - Procédé selon l'une des revendication 1 et 2 caractérisé en ce que le composé libérant dans l'eau l'ion alcalino-terreux est un composé du baryum ou du strontium.

5 - Procédé selon l'une des revendication 1 et 2 caractérisé en ce que le composé libérant dans l'eau l'ion alcalino-terreux est la baryte.

6 - Procédé de préparation de ferrites hexagonales selon l'une des revendications 1 ou 2 caractérisé en ce que après réaction les hexaferrites sont purifiées par lavage acide ou lavage acide et recuit.

7 - Procédé selon la revendication 1 de préparation d'hexaferrites dans lesquelles l'atome de fer est substitué, le procédé étant caractérisé en ce que l'on ajoute au mélange réactionnel constitué par la ferrite alcaline et le composé libérant dans l'eau l'ion alcalino-terreux un ou plusieurs sel(s) alcalin(s) d'oxyde(s) métallique(s).

8 - Procédé selon la revendication 7 dans lequel le (ou les) sel(s) alcalin(s) d'oxyde(s) métallique(s) sont choisis parmi les sels d'oxydes métalliques simples ou doubles, de telle manière que la substitution des hexaferrites soit bimétallique et corresponde à l'une des trois possibilités suivantes :

- Ti + métal bivalent
- Sn + métal bivalent
- Zr + métal bivalent

le métal bivalent étant choisi parmi le cuivre, le nickel, le cobalt, le magnésium, le zinc ou le fer bivalent.

9 - Procédé selon la revendication 7 dans lequel la substitution des hexaferrites correspond au couple métallique titane-cobalt.

**0186603**

Numéro de la demande

EP 85 42 0221

# RAPPORT DE RECHERCHE EUROPEENNE

Office européen
des brevets

## DOCUMENTS CONSIDERES COMME PERTINENTS

| Catégorie | Citation du document avec indication en cas de besoin des parties pertinentes | Revendication concernee | CLASSEMENT DE LA DEMANDE (Int Cl 4) |
|---|---|---|---|
| A | EP-A-0 039 773 (TOKYO SHIBAURA DENKI K.K.) * Exemples 1,2 * | 1,3,4, 6-9 | G 11 B 5/706 H 01 F 1/11 |
| A | JOURNAL OF THE ELECTROCHEMICAL SOCIETY, SOLID STATE SCIENCE, vol. 115, no. 8, août 1968, pages 826-829; K.O. HEVER: "Ion mobility in crystals of a mixed-alkali ferrite: KchiNa1-chiFe7O11" | | |

---

DOMAINES TECHNIQUES
RECHERCHES (Int Cl.4)

G 11 B
H 01 F

Le présent rapport de recherche a été établi pour toutes les revendications

| Lieu de la recherche | Date d'achèvement de la recherche | Examinateur |
|---|---|---|
| LA HAYE | 28-02-1986 | VITZTHUM N.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82